# EUROPÄISCHE PATENTANMELDUNG

(11) **EP 3 072 637 A2**
(43) Veröffentlichungstag der Anmeldung: **28.09.2016**
(21) Anmeldenummer: 16151782.6
(22) Anmeldetag: 19.01.2016
(51) Int. Cl.: B23Q 17/22, B25F 5/00, B23Q 17/24

(54) **WERKZEUG UND VERFAHREN ZUM BEHANDELN EINES WERKSTÜCKS MIT EINEM WERKZEUG**

(30) Priorität: 10.03.2015 DE 102015204231
(71) Anmelder: ROBERT BOSCH GMBH, 70442 Stuttgart (DE)
(72) Erfinder: Kurz, Juergen, 73557 Pfersbach (DE); Lukosz, Harald, 73614 Schorndorf (DE)
(74) Vertreter: Thürer, Andreas

(57) **Zusammenfassung**

Es ist ein Werkzeug (1; 2) und ein Verfahren zum Behandeln eines Werkstücks (3) mit einem Werkzeugelement (11) eines Werkzeugs (1; 2) bereitgestellt. Das Werkzeug (1; 2) umfasst eine Ermittlungseinheit (141; 1410) zur Ermittlung einer Eigenbewegung des Werkzeugs (1; 2), die während einer Messung eines Winkels (α) zwischen dem Werkzeug (1; 2) und dem Werkstück (3) ausgeführt wird, und eine Kompensationseinheit (142) zur Kompensation eines Winkelmessfehlers durch die von der Ermittlungseinheit (141; 1410) ermittelte Eigenbewegung, wobei der Winkelmessfehler aufgrund der Eigenbewegung des Werkzeugs (1; 2) entstand, die während der Messung des Winkels (α) ausgeführt wurde.

## Beschreibung

Die vorliegende Erfindung bezieht sich auf ein Werkzeug und ein Verfahren zum Behandeln eines Werkstücks mit einem Werkzeugelement eines Werkzeugs, bei welchen eine Kompensation von Winkelmessfehlern bei handgehaltenen Werkzeugen erfolgt.

Zur Produktion von Gegenständen, beispielsweise in Fertigungsanlagen, wie Fertigungsstraßen für Fahrzeuge, insbesondere Kraftfahrzeuge, Flugzeuge, usw., Einrichtungsgegenstände usw., werden oft handgehaltene Werkzeuge eingesetzt, mit welchen Werkstücke zu behandeln sind. Solche Werkzeuge sind beispielsweise Nietwerkzeuge, Schraubwerkzeuge, Schweißwerkzeuge oder Stanzwerkzeuge, usw. Ein solches Werkzeug verbindet dabei beispielsweise zwei Enden eines Werkstücks oder zwei oder mehr Werkstücke miteinander mit einer Schraube oder einem Niet oder durch Schweißen. Oder mit dem Werkzeug wird eine Öffnung in das Werkstück gebohrt oder gestanzt.

Dabei ist es wichtig, dass sich das Werkzeug im Betrieb in der richtigen Position oder Lage relativ zur Oberfläche des zu behandelnden Werkstücks befindet. Nur so kann das Werkzeug das Werkstück so behandeln oder bearbeiten, dass das Bearbeitungsergebnis vorgegebene Qualitätsanforderungen erfüllt. Dies ist insbesondere der Fall, wenn es sich um ein handgehaltenes Werkzeug handelt.

Vor allem bei handgehaltenen Werkzeugen ist es problematisch, dass bei der Behandlung des Werkstücks mit dem handgehaltenen Werkzeug Winkelmessfehler aufgrund einer Relativbewegung zwischen Werkzeug und Werkstück entstehen können.

Um diese Winkelmessfehler auszuschließen ist es denkbar, eine mechanische Abstützung zwischen dem handgehaltenen Werkzeug und dem von diesem zu behandelnden Werkstück vorzusehen. Eine solche Lösung hat jedoch den Nachteil, dass zum einen die mechanische Abstützung vorgehalten und zum anderen eingerichtet werden muss, was beides hohe Kosten verursacht. Zudem ist es nachteilig, dass die Bewegungsfreiheit des Werkzeugs und des Benutzers des Werkzeugs durch die mechanische Abstützung beschränkt ist. Ein weiterer Nachteil besteht darin, dass auch die mechanische Abstützung zwischen dem handgehaltenen Werkzeug und dem von diesem zu behandelnden Werkstück einem Verschleiß unterliegt, so dass die mechanische Abstützung von Zeit zu Zeit ausgetauscht werden muss. Somit verursacht die mechanische Abstützung einen nicht vernachlässigbaren Einsatz von Ressourcen und Kosten.

Daher ist es Aufgabe der vorliegenden Erfindung, ein Werkzeug und ein Verfahren zum Behandeln eines Werkstücks mit einem Werkzeugelement eines Werkzeugs bereitzustellen, mit welchen die zuvor genannten Probleme gelöst werden können. Insbesondere sollen ein Werkzeug und ein Verfahren zur Behandlung eines Werkstücks mit einem Werkzeugelement eines Werkzeugs bereitgestellt werden, bei welchen eine hohe Genauigkeit der Winkelmessung kostengünstig, einfach und ohne Einschränkungen für den Benutzer des Werkzeugs erzielt werden kann.

Diese Aufgabe wird durch ein Werkzeug nach Patentanspruch 1 gelöst.

Vorteilhafte weitere Ausgestaltungen des Werkzeugs sind in den abhängigen Patentansprüchen angegeben.

Das Werkzeug ermöglicht eine Kompensation eines Winkelmessfehlers, der bei einer Winkelmessung zwischen Werkzeug und Werkstück entstand. Dadurch wird eine verbesserte Genauigkeit der Winkelmessung erzielt.

Eine derartige Kompensation ist vor allem bei handgehaltenen Werkzeugen von Vorteil. Hierbei ist keine mechanische Abstützung zwischen Werkzeug und Werkstück mehr erforderlich, so dass für den Benutzer ansonsten bei der Bedienung des Werkzeugs am Werkstück eine uneingeschränkte Bewegungsfreiheit herrscht.

Durch den Wegfall der mechanischen Abstützung zwischen Werkzeug und Werkstück entfällt auch der Kostenaufwand für die mechanische Abstützung. Soweit ist der Einsatz des zuvor beschriebenen Werkzeugs kostengünstiger als mit mechanischer Abstützung zwischen Werkzeug und Werkstück. Dies gilt auch vor allem, da bei dem Werkzeug für die Kompensation der Winkelmessfehler zwischen Werkzeug und Werkstück Sensoren zum Einsatz kommen können, die bereits für die Winkelmessung oder andere Aufgaben am Werkzeug oder Werkstück vorhanden sind.

Die Aufgabe wird zudem durch ein Verfahren zum Behandeln eines Werkstücks mit einem Werkzeugelement eines Werkzeugs nach Patentanspruch 10 gelöst.

Das Verfahren erzielt die gleichen Vorteile, wie sie zuvor in Bezug auf das Werkzeug genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Schaubild mit einem Werkstück, das von einem Werkzeug gemäß einem ersten Ausführungsbeispiel behandelt wird;
Fig. 2 ein Blockschaltbild zur Veranschaulichung der Funktion der Kompensation von Winkelmessfehlern bei dem Werkzeug gemäß dem ersten Ausführungsbeispiel;
Fig. 3 ein Schaubild mit einem Werkstück, das von einem Werkzeug gemäß einem zweiten Ausführungsbeispiel behandelt wird; und
Fig. 4 ein Blockschaltbild zur Veranschaulichung der Funktion der Kompensation von Winkelmessfehlern bei dem Werkzeug gemäß dem zweiten Ausführungsbeispiel.

In den Figuren sind gleiche oder funktionsgleiche Elemente, sofern nichts anderes angegeben ist, mit denselben Bezugszeichen versehen.

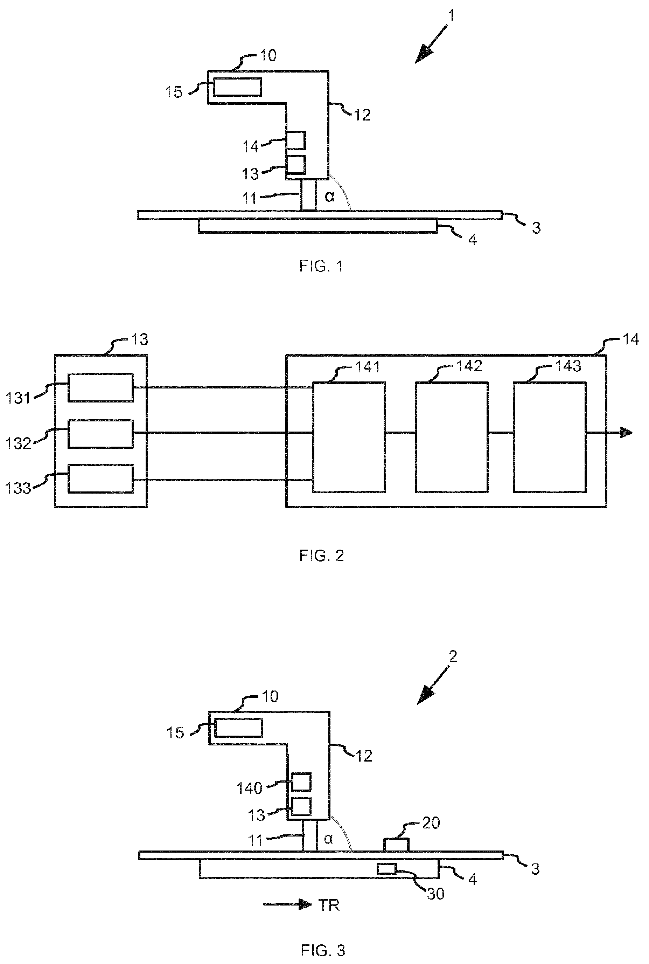

Fig. 1 zeigt ein Werkzeug 1 als handgehaltenes Werkzeug zum Behandeln eines oder mehrerer Werkstücke 3. Das Werkzeug 1 kann beispielsweise zum Einschrauben einer Schraube in ein oder mehrere Werkstücke 3 eingesetzt werden, die beispielsweise von einem Träger 4, wie einem Gestell oder Tisch oder einem Roboter, getragen werden. Hierbei ist das Werkzeug 1 gegenüber dem oder den Werkstücken 3 um einen Winkel α geneigt.

Das oder die Werkstücke 3 können beispielsweise Teile eines Fahrzeugs als Gegenstand sein, wobei das oder die Werkstücke 3 mit einer oder mehreren Schrauben oder Nieten verbunden werden oder in das oder die Werkstücke 3 eine Öffnung durch Bohren oder Stanzen eingebracht wird. Hierbei kann das Werkzeug 1 beispielsweise zwei Enden des Werkstücks 3 verbinden oder das Werkstück 3 und noch weitere nicht dargestellte Werkstücke können mit einer oder mehreren Schrauben oder Nieten verbunden werden, usw.. Nachfolgend wird davon ausgegangen, dass das Werkzeug 1 bei diesem Beispiel ein Schraubwerkzeug ist.

Das Werkzeug 1 hat einen Handgriff 10, ein Werkzeugelement 11, ein Antriebsgehäuse 12 mit nicht dargestelltem Antrieb für das Werkzeugelement 11, eine Erfassungseinrichtung 13, eine Steuereinrichtung 14 und eine Stromversorgung 15. Das Werkzeug 1 kann auch weitere Teile aufweisen, wie beispielsweise einen Startschalter usw., auch wenn diese in Fig. 1 nicht dargestellt sind.

Bei dem Werkzeug 1 kann die Stromversorgung 15 über ein Netzteil oder mittels einer Batterie, insbesondere einer nicht wieder aufladbaren oder wieder aufladbaren Batterie (Akkumulator) realisiert sein. In diesem Fall ist das Werkzeug 1 beispielsweise ein Akkuschraubwerkzeug.

Die Erfassungseinrichtung 13 dient zur Erfassung eines Winkels α zwischen dem Werkzeug 1 und dem Werkstück 3. Die Erfassungseinrichtung 13 gibt ihr Erfassungsergebnis an die Steuereinrichtung 14 weiter. Dies ist genauer in Fig. 2 veranschaulicht.

Gemäß Fig. 2 hat die Erfassungseinrichtung 13 einen Beschleunigungssensor 131 und einen Drehratensensor 132 und einen Erdfeldsensor 133. Es ist jedoch auch möglich, dass die Erfassungseinrichtung 13 nur einen oder zwei dieser Sensoren aufweist. Hierbei sind alle beliebigen Kombinationen möglich. Die Sensoren geben jeweils separat ihr Erfassungsergebnis an die Steuereinrichtung 14 weiter. Es ist jedoch auch möglich, dass die Erfassungseinrichtung 13 die Erfassungsergebnisse an die Steuereinrichtung 14 nur über eine Verbindungsleitung überträgt.

Wie zudem aus Fig. 2 ersichtlich, hat die Steuereinrichtung 14 eine Ermittlungseinheit 141, die eine Eigenbewegung des Werkzeugs 1 ermittelt, die während einer Messung des Winkels α zwischen dem Werkzeug 1 und dem Werkstück 3 ausgeführt wird. Hierbei verwendet die Ermittlungseinheit 141 das oder die Erfassungsergebnisse des oder der Sensor(en) 131, 132, 133 der Erfassungseinrichtung 13. Außerdem hat die Steuereinrichtung 14 eine Kompensationseinheit 142, welche das Ermittlungsergebnis der Ermittlungseinheit 141 empfängt und auf dieser Grundlage einen Winkelmessfehler kompensiert, der aufgrund der Eigenbewegung des Werkzeugs 1 entstand, die während einer Messung ausgeführt wurde. Hierfür kann die Kompensationseinheit 142 beispielsweise die von der Ermittlungseinheit 141 als Winkelmessfehler ermittelte Größe in dem Erfassungsergebnis für den Winkel α zwischen Werkzeug 1 und Werkstück 3 einrechnen.

Die Steuereinrichtung 14 weist zudem eine Erzeugungseinheit 143 auf, welche Parameter erzeugt, die durch eine Kompensation mit der Kompensationseinheit 142 korrigiert sind. Die Steuereinrichtung 14 kann dann mit diesen Parameter(n) das Werkzeug 1 entsprechend ansteuern.

Somit wird bei einem Verfahren zur Behandlung eines Werkstücks 3 mit dem Werkzeugelement 11 des Werkzeugs 1 zunächst mit der Ermittlungseinheit 141 eine mögliche Eigenbewegung des Werkzeugs 1 ermittelt, wie zuvor beschrieben, und dann mit der Kompensationseinheit 142 ein eventueller Winkelmessfehler kompensiert, wie zuvor beschrieben.

Auf diese Weise kann mit dem Werkzeug 1 wirksam eine Kompensation des Winkelmessfehlers erfolgen.

Fig. 3 zeigt ein Werkzeug 2 gemäß einem zweiten Ausführungsbeispiel. Das Werkzeug 2 ist in weiten Teilen gleich dem Werkzeug 1 gemäß dem ersten Ausführungsbeispiel aufgebaut. Im Unterschied zum vorangehenden Ausführungsbeispiel hat das Werkzeug 2 jedoch eine Steuereinrichtung 140, die auch Signale von einer Erfassungseinrichtung 20 am Werkstück 3 und/oder einer Erfassungseinrichtung 30 am Träger 4 des Werkstücks 3 berücksichtigen kann.

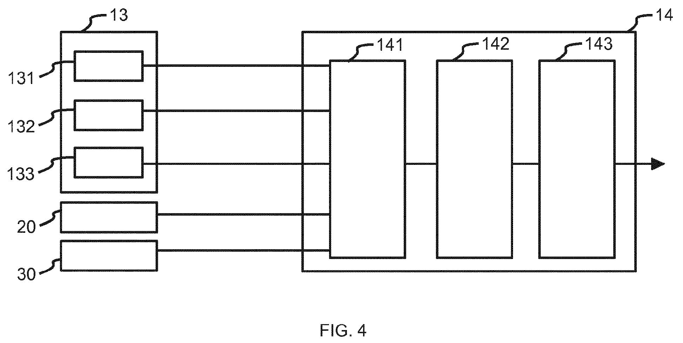

Gemäß Fig. 4 sind die Erfassungseinrichtungen 20, 30, wie auch die Erfassungseinrichtung 13 mit ihren Sensoren 131, 132, 133 ebenfalls an einer Ermittlungseinheit 1410 der Steuereinrichtung 140 angeschlossen. Demzufolge ermittelt die Ermittlungseinheit 1410 auch unter Berücksichtigung, ob sich das Werkstück 3 und/oder sein Träger 4 während der Winkelmessung zwischen Werkzeug 2 und Werkstück 4 bewegt, eine zugehörige Eigenbewegung.

Das heißt, dass die Ermittlungseinheit 1410 zudem ausgestaltet ist, eine Eigenbewegung des Werkstücks 3, die während einer Messung eines Winkels α zwischen dem Werkzeug 2 und dem Werkstück 3 ausgeführt wird, auf der Grundlage eines Erfassungsergebnisses der Erfassungseinrichtung 20 zu ermitteln. Hierbei gibt das Erfassungsergebnis der Erfassungseinrichtung 20 eine mögliche Eigenbewegung des Werkstücks 3 wieder. Anders ausgedrückt, das Erfassungsergebnis der Erfassungseinrichtung 20 gibt wieder, ob und wenn ja wie sich das Werkstück 3 selbst bewegt.

Zusätzlich oder alternativ kann die Ermittlungseinheit 1410 zudem ausgestaltet sein, eine Eigenbewegung des Trägers 4, die während einer Messung eines Winkels α zwischen dem Werkzeug 2 und dem Werkstück 3 ausgeführt wird, auf der Grundlage eines Erfassungsergebnisses der Erfassungseinrichtung 30 zu ermitteln. Hierbei gibt das Erfassungsergebnis der Erfassungseinrichtung 30 eine mögliche Eigenbewegung des Trägers 4 wieder. Anders ausgedrückt, das Erfassungsergebnis der Erfassungseinrichtung 20 gibt wieder, ob und wenn ja wie sich der Träger 4 des Werkstücks 3 selbst bewegt.

Die Erfassungseinrichtungen 20, 30 können auf die gleiche Weise aufgebaut sein, wie die Erfassungseinrichtung 13. Demzufolge kann auch jede der Erfassungseinrichtungen 20, 30 einen Beschleunigungssensor 131 und/oder einen Drehratensensor 132 und/oder einen Erdfeldsensor 133 aufweisen.

Die Kompensation mit der Kompensationseinheit 142 und die Funktion der Erzeugungseinheit 143 ist auch bei dem Werkzeug 2 die gleiche wie bei dem vorangehenden Ausführungsbeispiel für das Werkzeug 1 beschrieben.

Auf diese Weise kann eine Kompensation des Winkelmessfehlers auch noch den Fall einer Eigenbewegung des Werkstücks 3 und/oder seines Trägers 4 erfassen und wirksam kompensieren.

Alle zuvor beschriebenen Ausgestaltungen der Werkzeuge 1, 2 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Werkzeuge 1, 2 müssen nicht unbedingt handgehaltene Werkzeuge sein. Die Werkzeuge 1, 2 können auch jeweils an einer Halterung geführte Werkzeuge 1, 2 sein.

Das Werkzeug 10 kann ein Schraubwerkzeug und/oder ein Bohrwerkzeug und/oder ein Stanzwerkzeug und/oder ein Schweißwerkzeug und/oder ein anderes handgehaltenes Werkzeug sein.

Für die Erfassungseinrichtung 13 können auch zusätzliche oder andere Sensoren als die genannten Sensoren 131, 132, 133 zum Einsatz kommen, solange die zusätzlichen oder anderen Sensoren geeignet sind, die Eigenbewegungen des Werkzeugs 1, 2 und/oder des Werkstücks 3 und/oder des Trägers 4 des Werkstücks 3 zu erfassen.

Die Ermittlungseinheit 141, 1410 und/oder die Kompensationseinheit 142 und/oder die Erzeugungseinheit 143 können auch extern von der jeweiligen Steuereinrichtung 14, 140 angeordnet sein.

## Patentansprüche

1. Werkzeug (1; 2) zum Behandeln eines Werkstücks (3), mit einer Ermittlungseinheit (141; 1410) zur Ermittlung einer Eigenbewegung des Werkzeugs (1; 2), die während einer Messung eines Winkels (α) zwischen dem Werkzeug (1; 2) und dem Werkstück (3) ausgeführt wird, und einer Kompensationseinheit (142) zur Kompensation eines Winkelmessfehlers durch die von der Ermittlungseinheit (141; 1410) ermittelte Eigenbewegung, wobei der Winkelmessfehler aufgrund der Eigenbewegung des Werkzeugs (1; 2) entstand, die während der Messung des Winkels (α) ausgeführt wurde.

2. Werkzeug (1; 2) nach Anspruch 1, zudem mit einer Steuereinrichtung (14) zur Steuerung des Werkzeugs (1; 2) beim Behandeln eines Werkstücks (3), wobei die Steuereinrichtung (14) die Ermittlungseinheit (141; 1410) und/oder die Kompensationseinheit (142) aufweist.

3. Werkzeug (1; 2) nach Anspruch 1 oder 2, zudem mit einer Erzeugungseinheit (143) zur Erzeugung von Parametern, die durch eine Kompensation mit der Kompensationseinheit (142) korrigiert sind.

4. Werkzeug (1; 2) nach Anspruch 3, wobei die Parameter von der Steuereinrichtung (14) zur Steuerung des Werkzeugs (1; 2) verwendbar sind.

5. Werkzeug (2) nach einem der vorangehenden Ansprüche, wobei die Ermittlungseinheit (1410) zudem ausgestaltet ist zur Ermittlung einer Eigenbewegung des Werkstücks (3), die während einer Messung eines Winkels (α) zwischen dem Werkzeug (2) und dem Werkstück (3) ausgeführt wird, auf der Grundlage eines Erfassungsergebnisses einer eine Eigenbewegung des Werkstücks (3) erfassenden Erfassungseinrichtung (20) und/oder einer eine Eigenbewegung eines Trägers (4) des Werkstücks (3) erfassenden Erfassungseinrichtung (30).

6. Werkzeug (1; 2) nach einem der vorangehenden Ansprüche, zudem mit einer Erfassungseinrichtung (13) zur Erfassung eines Winkels (α) zwischen dem Werkzeug (1; 2) und dem Werkstück (3).

7. Werkzeug (1; 2) nach Anspruch 6, wobei die Erfassungseinrichtung (13) einen Beschleunigungssensor (131) und/oder einen Drehratensensor (132) und/oder einen Erdfeldsensor (133) aufweist.

8. Werkzeug (1; 2) nach einem der vorangehenden Ansprüche, wobei das Werkzeug (1; 2) ein handgehaltenes Werkzeug ist.

9. Werkzeug (1; 2) nach einem der vorangehenden Ansprüche, wobei das Werkzeug (1; 2) ein Nietwerkzeug oder ein Schraubwerkzeug oder ein Stanzwerkzeug oder ein Schweißwerkzeug ist.

10. Verfahren zum Behandeln eines Werkstücks (3) mit einem Werkzeugelement (11) eines Werkzeugs (1; 2), mit den Schritten Ermitteln, mit einer Ermittlungseinheit (141; 1410) des Werkzeugs (1; 2), einer Eigenbewegung des Werkzeugs (1; 2), die während einer Messung eines Winkels (α) zwischen dem Werkzeug (1; 2) und dem Werkstück (3) ausgeführt wird, und Kompensieren, mit einer Kompensationseinheit (142), eines Winkelmessfehlers durch die von der Ermittlungseinheit (141; 1410) ermittelte Eigenbewegung, wobei der Winkelmessfehler aufgrund der Eigenbewegung des Werkzeugs (1; 2) entstand, die während der Messung des Winkels (α) ausgeführt wurde.
